Europäisches Patentamt

(19) European Patent Office

Office européen des brevets

(11) Numéro de publication: **0 011 028**
A1

# (12) DEMANDE DE BREVET EUROPEEN

(21) Numéro de dépôt: **79400795.5**

(22) Date de dépôt: **24.10.79**

(51) Int. Cl.³: **A 01 D 1/14,** B 25 G 1/04

(30) Priorité: **07.11.78 FR 7831491**

(71) Demandeur: **DEVILLE S.A., F-49150 Baugé (FR)**

(43) Date de publication de la demande: **14.05.80**
**Bulletin 80/10**

(72) Inventeur: **Deville, Antoine, Le Tir, F-49150 Le Vieil**
**Baugé (FR)**

(84) Etats contractants désignés: **AT BE CH DE FR GB IT**
**LU NL SE**

(74) Mandataire: **Fruchard, Guy, CABINET CHEREAU**
**Maximilianstrasse 15, D-8000 München 22 (DE)**

(54) **Assemblage de manche pour instrument de jardinage.**

㊱ La présente invention concerne les instruments de jardinage.

Sur un embout mâle (2) de l'outil (1) est emmanchée une douille de raccordement (3) en matériau plastique présentant un alésage longitudinal légèrement tronconique (8), un élément de manche tubulaire métallique creux (4) étant emmanché sur la douille (3). L'élément (4) comprend, successivement, une première extrémité légèrement tronconique (9), une partie intermédiaire tronconique (12), et une partie principale cylindrique droite (13). Dans un mode de réalisation, la partie principale est prolongée par une seconde extrémité (11) légèrement tronconique pour recevoir par emmanchement et collage un élément de manche en bois (16).

Application aux instruments de jardinage individuels, indémanchables.

EP 0 011 028 A1

1.

ASSEMBLAGE DE MANCHE POUR INSTRUMENT DE JARDINAGE

La présente invention concerne les instruments de jardinage et plus particulièrement un assemblage de manche pour instruments de jardinage individuels.

Les instruments de jardinage usuels, tels que rateau, serfouette, binette ou houe, comprennent ordinairement une partie d'outil métallique pourvue d'un manchon creux pour recevoir l'extrémité d'un manche en bois. Ces instruments de jardinage présentent des problèmes bien connus au niveau du raccordement entre le manche et l'outil, qui ont conduit à chercher des solutions de montage différents d'un manche sur l'outil. Une solution proposée consiste à utiliser un manche métallique emmanché et collé sur un embout formé sur la partie formant outil de l'instrument. Cet assemblage présente des inconvénients, notamment de tenue mécanique, au niveau du raccordement entre le manche et l'outil du fait que ceux-ci sont constitués de métaux différents et présentent en conséquence des coefficients de dilatation différents. La colle résiste par ailleurs mal aux chocs résultant du travail de la terre avec l'instrument considéré. D'autre part, le manche, généralement réalisé en alliage léger, ne permet pas d'assurer un équilibrage convenable de l'instrument. Enfin, l'embout doit être assez largement dimensionné pour correspondre au diamètre nominal requis pour le manche, ce qui n'est pas toujours compatible avec les dimensions de l'outil, notamment pour les rateaux, dont les traverses sont généralement assez fines.

La présente invention a pour objet d'obvier à ces inconvénients des instruments de jardinage de l'art antérieur en proposant un assemblage de manche simple, de faible coût de construction, assurant une parfaite cohésion entre le manche et l'outil rendant celui-ci indémanchable, et ce,sans recourir à des moyens de fixation annexes.

La présente invention a pour autre objet de proposer un assemblage de manche de ce type, permettant l'utilisation d'un élément de manche en bois terminal, et conservant ainsi les qualités tactiles et d'équilibre des manches en bois des instruments traditionnels.

Pour ce faire, selon une caractéristique de la présente invention, un tel assemblage de manche pour instruments de jardinage comportant un outil pourvu d'un embout mâle de fixation du type comprenant une douille de raccordement présentant un logement central pour recevoir l'embout et un élément de manche tubulaire métallique comportant une première extrémité destinée à recevoir la douille est caractérisé en ce que la douille de raccordement (3) est en un matériau plastique et présente un alésage coaxial légèrement tronconique (8) et en ce que l'élément de manche tubulaire (4) comprend une première partie d'extrémité (9) terminée par la première extrémité (10) pour recevoir la douille de raccordement et une seconde partie d'extrémité droite (11) de dimensions transversales supérieures à celles de la première partie d'extrémité, une partie intermédiaire tronconique (12) reliant ces deux parties de l'élément de manche tubulaire.

Selon une autre caractéristique de la présente invention, le diamètre interne de la première extrémité de l'élément de manche tubulaire est légèrement inférieur au diamètre externe de l'embout de fixation qui est cylindrique, la seconde partie d'extrémité de l'élément de manche tubulaire ayant une partie principale cylindrique et une partie d'extrémité légèrement tronconique divergeante pour recevoir une extrémité d'un élément de manche.

Un tel assemblage permet, avec un embout mâle de diamètre réduit, compatible avec les dimensions générales de l'outil, d'obtenir un raccordement immédiat, efficace, fiable et indémontable entre le manche et l'outil, la partie utile du manche gardant un diamètre sensiblement standard, pour une utilisation meilleure de l'instrument, et pouvant être terminée par un élément de manche en bois restituant le confort des manches traditionnels.

D'autres caractéristiques et avantages de la présente invention ressortiront de la description suivante d'un mode de réalisation donné à titre illustratif mais nullement limitatif faite en relation avec les dessins annexés sur lesquels :

La figure 1 représente de façon schématique un mode de réalisation d'assemblage de manche selon la présente invention;

La figure 2 représente, en perspective, un instrument de jardinage pourvu de l'assemblage de manche de la figure 1; et

La figure 3 représente un instrument de jardinage pourvu d'un autre assemblage de manche selon la présente invention.

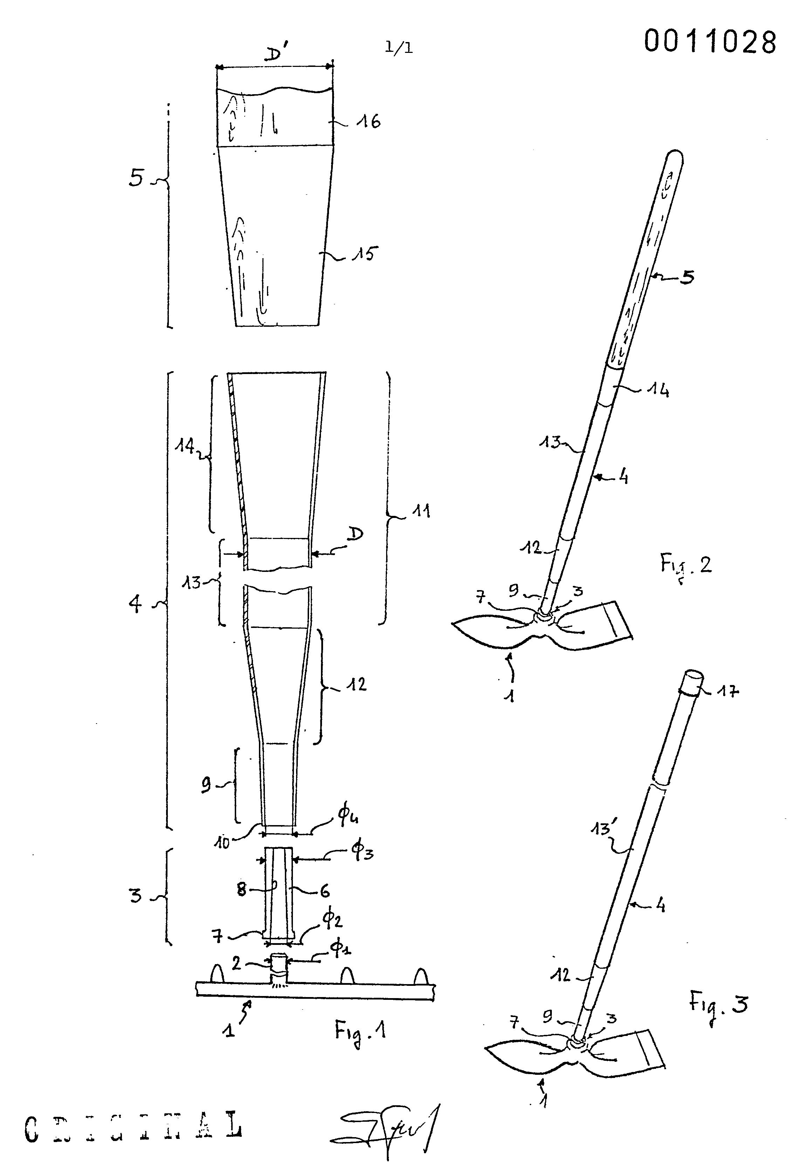

Comme représenté sur les figures, l'instrument de jardinage comporte, de façon traditionnelle, une partie formant outil, généralement référencée 1, par exemple, un rateau. La traverse du rateau comporte un embout ou une soie mâle 2, cylindrique, de diamètre réduit $\phi_1$. L'assemblage de manche selon la présente invention comporte dans le mode de réalisation des figures 1 et 2, trois sous-ensembles principaux à savoir, successivement, une douille de raccordement en matière plastique 3, un élément de manche tubulaire métallique creux 4, et un élément de manche terminal en bois 5.

La douille de raccordement 3, réalisée par exemple en polyamide, avantageusement en nylon, comporte un corps cylindrique 6 et une partie d'extrémité formant collerette 7 de diamètre supérieur à celui de la partie cylindrique 6. L'ensemble de la douille 3 est traversé par un alésage longitudinal 8 ayant un diamètre $\phi_2$ au niveau de la partie voisine de la collerette 7, très légèrement inférieur au diamètre externe $\phi_1$ de l'embout 2, pour permettre un emmanchement à force de la douille 3 sur cet embout. L'alésage 8 est de préférence tronconique convergeant dans la direction opposée à la collerette, avec un angle de conicité de l'ordre de 1°.

L'élément de manche tubulaire métallique 4, réalisé par exemple en tôle d'aluminium, comporte une première partie d'extrémité 9 légèrement tronconique divergeant à partir de l'extrémité 10 d'un angle voisin de 1°, le diamètre interne $\phi_4$ de l'extrémité 10 étant sensiblement égal au diamètre externe $\phi_3$ du corps cylindrique 6 de la douille 3. L'élément de manche tubulaire 4 comporte une seconde partie d'extrémité 11 de diamètre externe D correspondant sensiblement au diamètre nominal requis pour le manche. Une partie intermédiaire tronconique 12 relie les parties directement 9 et 11 pour passer progressivement, sur une longueur de l'ordre de 50 à 80 mm, du diamètre de l'extrémité élargie de la partie d'extrémité légèrement tronconique 9 au diamètre D.

Avec cette configuration, lorsque l'embout 2 est emmanché serré dans la douille 3, avec la collerette 7 en butée contre la traverse ou le corps de l'outil, la douille 3 étant elle-même emmanchée serrée dans la partie d'extrémité 9 de l'élément de manche tubulaire, le léger fluage de la matière plastique de la douille 3 et les conicités opposées de son alésage 8 et de la partie d'extrémité 9 rendent l'assemblage quasiment indémontable, supportant des efforts d'arrachement supérieurs à 300 kilogs.

Dans le mode de réalisation de la figure 1, l'élément de manche tubulaire 4 comporte une seconde partie d'extrémité 11 divisée à partir de la partie intermédiaire 12, en une partie principale cylindrique droite 13 et une d'extrémité légèrement tronconique 14, divergeant vers l'extérieur d'un angle de l'ordre de 1°, pour recevoir à emmanchement serré une extrémité tronconique 15, convergeant vers l'extérieur d'un angle également voisin de 1°, de l'élément de manche en bois 5, dont le corps cylindrique droit 16 a un diamètre D' en conséquence légèrement supérieur au diamètre D de la partie principale cylindrique 13 de l'élément tubulaire 4. L'assemblage de l'élément de manche en bois s'effectue par emmanchement dur avec, en outre, collage au moyen d'un adhésif tel que celui commercialisé sous la marque "Lactite". Sur les figures, la conicité des éléments légèrement tronconiques est fortement exagérée pour la clarté des dessins.

Selon une caractéristique de ce premier mode de réalisation de la présente invention, la longueur de l'élément de manche tubulaire est comprise entre environ 1/3 et environ 2/3 de la longueur totale du manche.

Dans un mode de réalisation particulier, donné à titre indicatif, convenant par exemple pour un rateau pourvu d'un embout de diamètre $\phi_1$ = 10 mm, les dimensions de l'assemblage de manche selon la présente invention sont les suivantes :

- pour la douille 3 : longueur hors tout : 56 mm; diamètre externe $\phi_3$ : 16 mm; diamètre interne d'entrée $\phi_2$ : 9,9 mm; diamètre interne de sortie $\phi_5$ : 9,4 mm;

- pour l'élément tubulaire 4, réalisé en utilisant des matrices de rétreint coniques, : épaisseur du métal de 0,75 mm à 1 mm; longueur de la première partie d'extrémité tronconique 9:50 mm; diamètres extrêmes : 13,5 et 19 mm; longueur de la partie intermédiaire tronconique 12 : 70 mm; diamètre interne d'entrée $\phi_4$ : 15,5 mm; longueur de la partie principale cylindrique 13 : 480 mm, diamètre D : 25 mm;

— pour l'élément de manche en bois 5 : longueur hors tout 900 mm; longueur de la partie d'extrémité tronconique 15 : 70 mm; diamètre D' : 27,5 mm.

Dans le mode de réalisation de la figure 3, l'intégralité du manche est métallique et, en conséquence, l'élément tubulaire 4 présente une seconde partie d'extrémité cylindrique droite 13' au diamètre D. à partir de l'extrémité évasée de la partie intermédiaire tronconique 12. L'extrémité du manche est alors fermée par un bouchon ou par un capuchon 17.

Quoique la présente invention ait été décrite en relation avec un mode de réalisation particulier, elle ne s'en trouve pas limitée mais est au contraire susceptible de modifications et de variantes qui apparaîtront à l'homme de l'art. En particulier l'élément de manche tubulaire peut être brossé et/ou avantageusement revêtu, au moins extérieurement, d'une couche de résine époxy.

REVENDICATIONS

1 - Assemblage de manche pour instrument de jardinage comportant un outil pourvu d'un embout mâle de fixation, comprenant une douille de raccordement présentant un logement central pour recevoir l'embout et un élément de manche tubulaire métallique comportant une première extrémité destinée à recevoir la douille, caractérisé en ce que la douille de raccordement (3) est en un matériau plastique et présente un alésage coaxial légèrement tronconique (8) et en ce que l'élément de manche tubulaire (4) comprend une première partie d'extrémité (9) terminée par la première extrémité (10) pour recevoir la douille de raccordement et une seconde partie d'extrémité droite (11) de dimensions transversales supérieures à celles de la première partie d'extrémité, une partie intermédiaire tronconique (12) reliant ces deux parties de l'élément de manche tubulaire.

2 - Assemblage de manche selon la revendication 1, caractérisé en ce que la douille (3) est cylindrique, l'alésage (8) ayant un diamètre maximum ($\emptyset_2$) légèrement inférieur au diamètre externe ($\emptyset_1$) de l'embout (2), le diamètre interne ($\emptyset_4$) de la première extrémité (10) de l'élément de manche tubulaire (4) étant sensiblement égal au diamètre externe ($\emptyset_3$) de la douille.

3 - Assemblage de manche selon l'une quelconque des revendications 1 à 4, caractérisé en ce que la première partie d'extrémité (9) de l'élément de manche tubulaire (4) est légèrement tronconique, divergeant à partir de la première extrémité (10).

4 - Assemblage de manche selon l'une quelconque des revendications 1 à 3, caractérisé en ce que la douille (3) comporte à son extrémité recevant l'embout et présentant le diamètre d'alésage maximum ($\emptyset_2$) une collerette (7) saillant radialement vers l'extérieur.

5 - Assemblage de manche selon l'une quelconque des revendications 1 à 4, caractérisé en ce que la douille (3) est réalisée en un polyamide.

6 - Assemblage de manche selon l'une quelconque des revendications 1 à 5, caractérisé en ce que la seconde partie d'extrémité (11) de l'élément de manche tubulaire (4) comporte, à partir de la partie intermédiaire tronconique (12) une partie principale cylindrique droite (13) et une extrémité légèrement tronconique (14) divergeant à partir de la partie principale cylindrique, pour recevoir une extrémité (15) d'un élément de manche en bois (5).

7 - Assemblage de manche selon la revendication 6, caractérisé en ce que la longueur de l'élément de manche tubulaire (4) est comprise entre environ 1/3 et environ 2/3 de la longueur totale du manche.

8 - Assemblage de manche selon la revendication 6 ou la revendication 7, caractérisé en ce que l'extrémité (15) de l'élément de manche en bois (5) est taillé légèrement tronconique sensiblement en correspondance avec l'extrémité légèrement tronconique (14) de la seconde partie d'extrémité (11) de l'élément de manche tubulaire (4).

9 - Instrument de jardinage, caractérisé en ce qu'il comporte un assemblage de manche selon l'une quelconque des revendications 1 à 8.

10 - Instrument de jardinage selon la revendication 9, caractérisé en ce que le diamètre ($\emptyset_1$) de l'embout (2) de l'outil (1) est inférieur à la moitié du diamètre nominal du manche.

11 - Instrument de jardinage selon la revendication 9, ou la revendication 10 dans leur rattachement aux revendications 6 à 8, caractérisé en ce que l'élément de manche en bois (5) est monté dans l'élément tubulaire de manche (4) par emmanchement dur et collage.

0011028

1/1

Fig. 1

Fig. 2

Fig. 3

**Office européen
des brevets**

**RAPPORT DE RECHERCHE EUROPEENNE**

0011028

Numéro de la demande

EP 79 40 0795

| | DOCUMENTS CONSIDERES COMME PERTINENTS | | CLASSEMENT DE LA DEMANDE (Int. Cl.) |
|---|---|---|---|
| Catégorie | Citation du document avec indication, en cas de besoin, des parties pertinentes | Revendication concernee | A 01 D 1/14<br>B 25 G 1/04 |
| | FR - A - 813 342 (PRUD'HOMME)<br><br>* L'ensemble *<br><br>-- | 1,2,9,<br>11 | |
| | US - A - 2 606 050 (MORRIS)<br><br>* Colonne 2, lignes 26-43; colonne 5, lignes 2-20 *<br><br>---- | 1,4 | |

**DOMAINES TECHNIQUES RECHERCHES (Int. Cl.)**

A 01 D
A 01 B
B 25 G

**CATEGORIE DES DOCUMENTS CITES**

X: particulièrement pertinent

A: arrière-plan technologique

O: divulgation non-écrite

P: document intercalaire

T: théorie ou principe à la base de l'invention

E: demande faisant interférence

D: document cité dans la demande

L: document cité pour d'autres raisons

&: membre de la même famille, document correspondant

Le présent rapport de recherche a été établi pour toutes les revendications

| Lieu de la recherche | Date d'achevement de la recherche | Examinateur |
|---|---|---|
| La Haye | 23-01-1980 | DE LAMEILLEURE |

OEB Form 1503.1 06.78